# EUROPEAN PATENT APPLICATION

(11) **EP 0 791 498 A1**
(43) Date of publication of application: **27.08.1997**
(21) Application number: 97830068.9
(22) Date of filing: 17.02.1997
(51) Int. Cl.: B60M 1/00, B60M 1/28, G01B 11/04

(54) **An apparatus for checking electrical lines**

(30) Priority: 23.02.1996 IT BO960082
(71) Applicant: Dallara, Riccardo, 44100 Ferrara (IT)
(72) Inventor: Dallara, Riccardo, 44100 Ferrara (IT)
(74) Representative: Lanzoni, Luciano

(57) **Abstract**

The invention relates to an apparatus for checking electrical lines, which can be used, in particular, to check the state of wear on electrical lines consisting of at least one contact wire designed to form an electrical connection with a sliding contact on an electric machine; the apparatus being of the opto-electronic type and measuring the state of wear on the wire, detecting the various ways in which a substantially directive band of light striking the wire is reflected, according to the state of wear on the wire.

## Description

The present invent:ion relates to an apparatus for checking electrical lines and, in particular, an apparatus which can be used to check electrical lines designed to supply power to locomotives and similar electric machines. Machines of this type are connected to a contact wire of an electrical line from which they receive the energy necessary for traction.

Locomotives are fitted with a pantograph, the top of which has an electrical sliding contact, which forms the electrical connection with an overhead line, from which electrical energy is taken.

The electrical overhead line is created using wires made of conducting materials (normally copper), supported by posts and subject to deterioration due to interaction with the sliding contact of the pantograph and atmospheric agents.

Since a reduction in the diameter of the contact wire which takes it below a given value may cause the wire to break (due to reduction of the mechanical strength), the state of wear on the contact wires must be checked periodically. This check is carried out manually, measuring the diameter of the contact wire with a gauge, and combining this test with a visual check of the line by the operators, who travel along the railway line on a carriage.

If excessive deterioration is detected, that is to say, if the diameter measured is below a given limit, the wire must be substituted.

The intervals at which the checks must be carried out are established according to statistical criteria, that is to say, according to statistical averages relative to previous measurements and, above all, depending on the density of traffic on the line in question: whatever the case, a sampling check can be defined.

Amongst the disadvantages of the said method, it must be emphasised that manual measurements are time consuming and cannot effectively cover the entire railway line.

The object of the present invention is to overcome the afore-mentioned disadvantages with an apparatus for checking electrical lines which can detect the wear on the contact wires of electrical lines, especially overhead lines used to power trains, with an opto-electronic system which uses the ways in which the light is reflected by the electrical contact wires in the said lines.

The apparatus is based on the concept that a band of substantially directive light, striking a contact wire, is reflected in different ways, depending on the state of wear on the wire.

In fact, the cross-section of a new contact wire is substantially circular; the portion of the wire which comes into contact with the pantograph's sliding contact is the lower portion which, again in cross-section, obviously has the shape of a circular arc. For this reason, a substantially directive band of light which strikes the contact portion of a new (or unworn) wire is returned in a series of reflected bands, part of which is divergent and another part, or central portion which arrives at the wire according to a direction which coincides with the radius of the wire (i.e.: perpendicular to the tangent to the circle which defines the cross-section of the wire), is reflected on a plane which contains the relative incident ray and the direction in which the wire extends.

The rubbing action of the pantograph sliding contact leads to a reduction in the cross-section of the wire, causing the lower, contact portion to pass from the afore-mentioned circular arc shape to a chord shape. The chord shape causes a variation in the way in which the incident ray is reflected. Basically, the widt:h of the central portion of the band which is reflected on a plane coincident with the incident plane increases according to the length of the chord as the wear on the wire gradually increases.

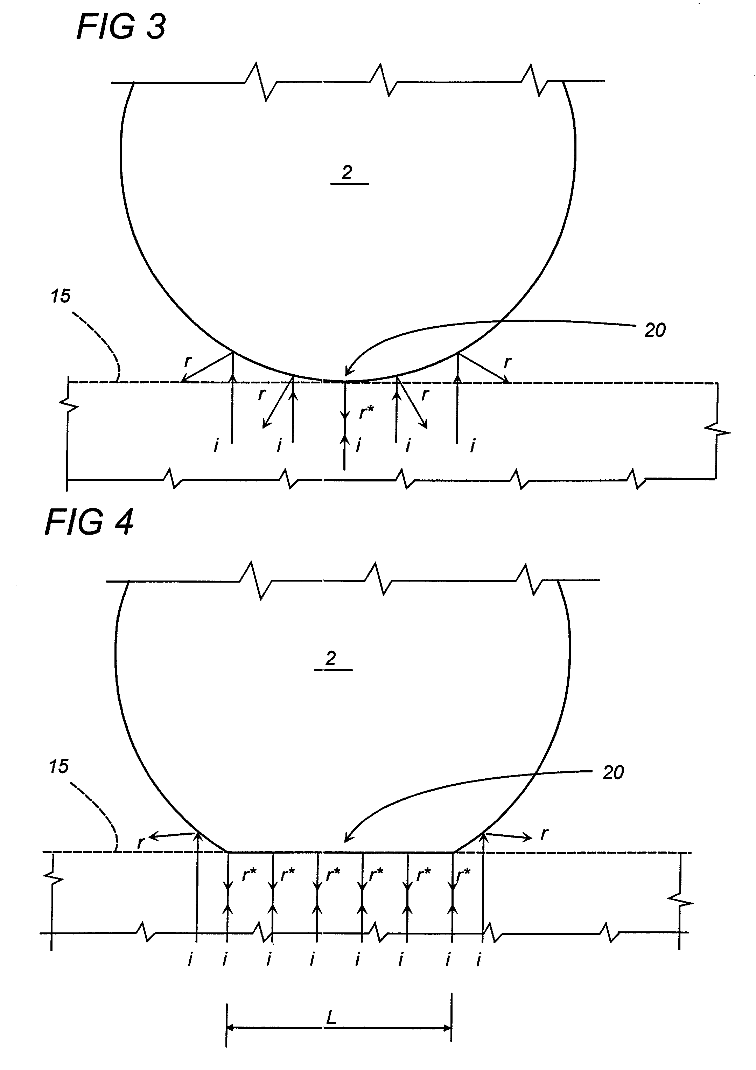

The concept is more easily understood with reference to figures 3 and 4, which are schematic representations respectively of a portion of new wire and one of worn wire. In the drawings, the numeral 2 is used to indicate the wire, which is partially shown and is in cross-section. The portion of the wire designed for contact with the sliding contact (also schematically illustrated and partially as a dashed line, labelled 15) is labelled 20 in the case of new wire and 20' in the case of worn wire; the incident rays are labelled i, whilst those reflected are labelled r. When the direction of the reflected ray lies substantially on the same plane as the direction of the incident ray and the direction in which the wire extends, the reflected ray is labelled r*. The different way in which the light is reflected according to whether the wire is new or worn is evident and corresponds to the difference in the width of the band of reflected rays r*; in fact, the reflected band r* in the example in figure 3 is extremely narrow, whilst in the example in figure 4 it corresponds to the length L of the chord which defines the contact portion 20' in cross-section. The apparatus disclosed by the present invention has means which emit a substantially directive light band, said means designed to send a band onto the lower portion of the wire (that subject to wear following contact with the sliding contact) at an incident angle, and means for the detection of light emissions along a preset reflective path on a plane upon which the incident ray lies, including the-direction in which the wire extends.

The detection means detect the quantity of light rays reflected in a direction which lies on the same plane as that of emission or incidence and on which the wire extends, so as to establish, according to the afore-mentioned principle, the state of wear on the contact wire.

In the case of new wire (i.e.: with a limited amount of wear) the detection means will receive a limited amount of light, reflected by the contact portion which, in cross-section, substantially has the shape of a circular arc. As the wear on the wire increases, the light received will increase, with a corresponding increased width of the band of reflected rays on the plane of the corresponding incident rays and on which the wire extends (those labelled r* in figures 3 and 4).

Obviously, when the length of the said chord equals the diameter of the wire, the said length decreases; the occurrence of such a situation is not considered, since it relates to values greater than the maximum wear limits allowed.

The technical specifications of the present invention, according to the said objects, are clearly indicated in the claims herein and their advantages are made clearer in the detailed description below, with reference to the accompanying drawings, which illustrate a preferred embodiment of the invention without in any way limiting its application, and in which:
- figure 1 is a block diagram, of an embodiment of the present invention;
- figure 2 is side view with some parts sketched and/or not in scale for convenience, of an embodiment of the apparatus disclosed, connected to an electrical traction machine;
- figures 3 and 4 are schematic illustrations of possible interactions of light rays with a portion of a contact wire, shown in cross-section and limited to the part designed for contact with a sliding contact.
- figures 5, 6 and 7 are schematic illustrations of several details relative to possible embodiments of the apparatus.

With reference to the accompanying drawings, the apparatus for checking the state of wear on electrical lines disclosed by the present invention is labelled as a whole with the numeral 1.

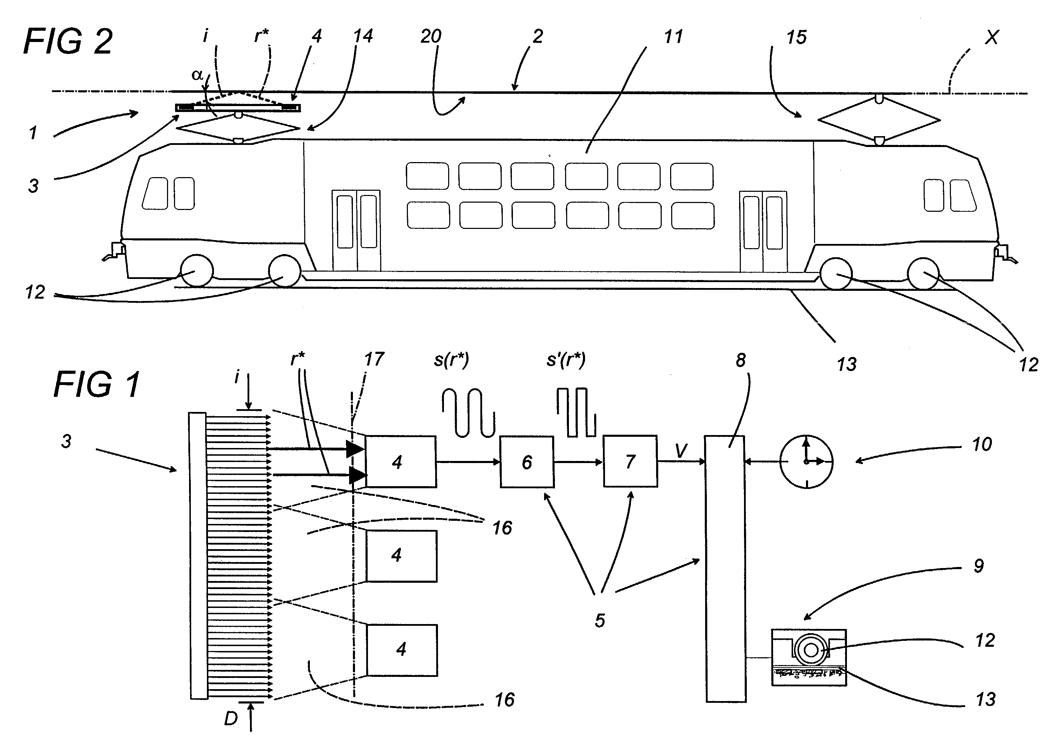

As already indicated, the apparatus 1 can be used, in particular, to check the state of wear on electrical power supply lines, represented by a contact wire 2 in the example in figure 2.

Again in the example in figure 2, an electrical railway engine 11 is shown, which moves on wheels 12 on a rail 13 and has a sliding contact 15 designed to allow electrical connection with the wire 2, that is to say, a contact portion 20, normally positioned on the lower part of the wire in railway lines.

The contact portion 20 of the wire 2, as is more clearly shown in figures 3 and 4 described previously, passes, with wear, from a circular arc shape, in a cross-section of the direction in which the wire extends (labelled X), to a chord shape (as in the example labelled 20' in figure 4) whose length increases with the degree of wear on the wire.

The apparatus basically consists of light emitting means 3, transducer means 4 which convert the light signal into an electrical signal, and processing means 5, described in detail below.

The light emitting means 3 are designed to emit a first substantiality directive light band or incident band i, directed towards the contact portion 20 with a trajectory which forms a first angle α to the direction X in which the wire extends, so that it is reflected in a second band or reflected band r.

In a preferred embodiment, the light emitting means may be of the type with monochromatic light, consisting of high-efficiency, narrow-angle LEDs. Alternatively, the light emitting means may be lenticular lamps, fitted with a converging lens for the generation of a directive band of rays of light which are substantially parallel.

For use on railway lines, in which at least one contact wire is envisaged, positioned along a broken line with a given width D, the light emitting means 3 may consist of a plurality of LEDs (or lenticular lamps), positioned over a width not less than the width D of the arrangement of the broken line.

The use of LEDs or lenticular lamps is particularly advantageous, since such devices are very light and reliable, unaffected by stress such as vibrations, jolts, etc. Moreover, they allow an optimum check of the intensity of light emitted and the relative angle of emission.

The transducer means 4 which convert the light signal into an electrical signal are designed to detect reflected light bands r* which are substantially coplanar with the direction of the corresponding incident bands i and the direction X in which the wire 2 extends.

Similarly to the light emitting means 3, for the said means 4, in the case of overhead electrical power supply lines which envisage at least one contact wire along a broken line with given width D, the transducer means 4 for the light signal may have a range 16 or reading angle 16 whose width is at least the said given value D. With such a wide range, together with the electronic part described above, a greater number of contact wires can be checked.

The transducer means 4 may consist of at least one CCD (charge coupled device) whose output is a first signal s(r*) relative to the reflected band r*. The use of CCDs to detect reflected bands allows a rapid reading and so rapid use of the apparatus. With such devices, 1000 samples per second can be obtained: for this reason, optimum wire measurements can be taken even at high speeds; for example, at a speed of 180 km/h the interval between readings is approximately 5 cm.

Such devices, together with the LEDs (or lenticular lamps) used for light emission, allow apparatus to be obtained which has no mechanical moving parts and so is extremely strong and reliable.

Moreover, focusing means 17 may be envisaged, connected to the transducer means 4 for the light signal and designed to focus the reading of the transducer means 4 exclusively on the contact portion 20, so as to receive light signals reflected exclusively from the same portion 20. These focusing means 17 may consist of photographic lenses, in particular of the type with a limited depth of field, so as to exclude light signals relative to objects or parts of objects at different heights to the contact portion of the wire. In figure 1 the said means are schematically represented by a dashed line located between the transducer means 4 for the light signal and the light emitting means 3.

The processing means 5 are connected to the transducer means 4 and are designed to measure the intensity of the reflected bands r* according to the electrical signal s(r*), so as to establish the state of wear on the wire 2 according to the intensity of the reflected bands r*, that is to say, according to the change in the shape of the contact portion 20, 20'.

In the example illustrated, the processing means 5 include a squaring device 6 which is preferably of the type with a threshold that varies depending on self-adjustment values, according to the ambient light, so as to convert the first signal s(r*) received by the transducer means 4 for the light signal into a second signal s' (r*) which is corrected according to the said light.

Moreover, a time measurement circuit 7 is envisaged, designed to correlate a signal received, directly or indirectly, by the transducer means 4 for the light signal with a period of time, so as to supply in output a third signal v depending on the permanence of a light signal in a given position for a given time interval.

Connecting and/or archiving means 8 may be envisaged, connected to at least one timing circuit or clock 10 and/or to a circuit 9 which detects the movement of the electric machine 11.

The entire apparatus 1 can be supported by a pantograph 14 (as shown in figure 2) or a similar load-bearing structure designed to keep the apparatus at a constant distance from the wire, so As to allow the positioning of light emitting means 3, transducer means 4 at preset distances and configurations.

To eliminate the mechanical interaction between the pantograph and the wire to be measured, a different embodiment may be used, being particularly suitable for those cases in which the machine moves at high speeds.

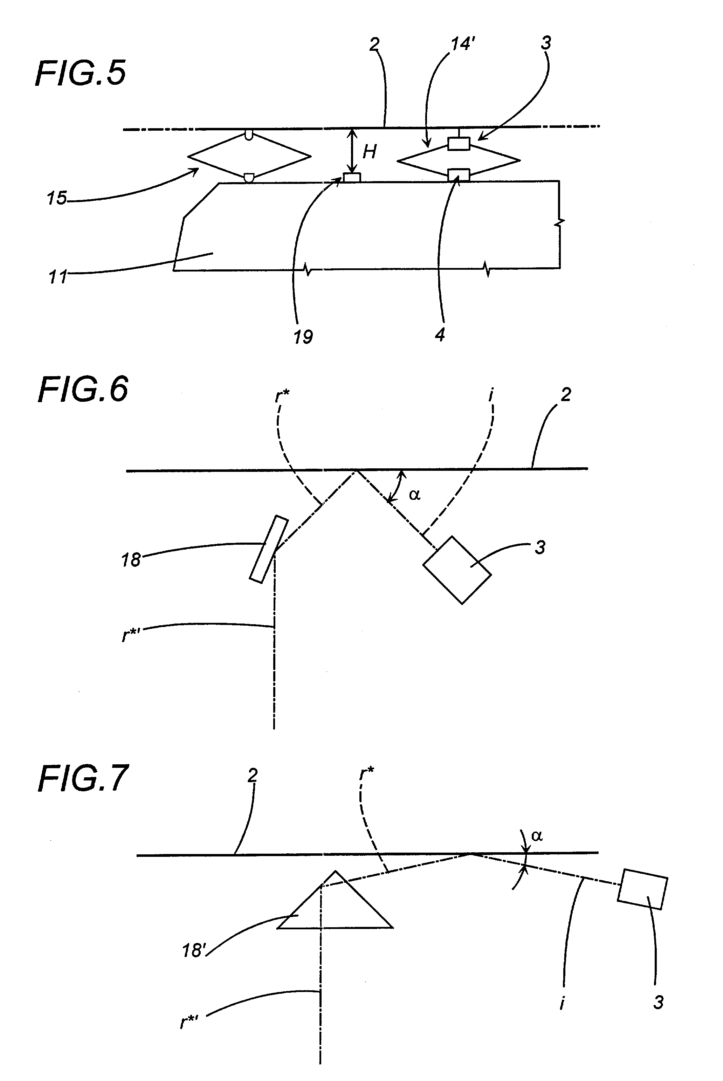

This embodiment of a support for the apparatus 1 is represented in figure 5, in which the numeral 14 is used to indicate a pantograph designed to support only the part relative to the light emitting means 3 of the apparatus 1. In other words, the part relative to the light emitting means is separated from that relative to the transducer means 4 in the apparatus 1; this allows the weight on the upper part of the pantograph 14' to be notably limited. The electric machine 11 can be fitted with a standard sliding contact 15, designed to allow electrical connection with the contact wire 2, and means for detection of the distance H from the contact wire 2 itself, said means represented by the block 19 in figure 5. In this way, the upper part of the pantograph 14' is kept at a constant distance from the contact wire 2.

Since, in this embodiment, the light emitting means 3 and transducer means 4 are separated (positioned respectively on the upper and lower parts of the pantograph 14'), suitable means 18 are envisaged to deflect the reflected ray r* towards the transducer means 4.

The said means 18 for deflecting the reflected ray r* may be a mirror 18, as shown in figure 6, or a prism 18', as shown in figure 7. The deflecting means 18 or 18' deflect the reflected ray r* (that is to say, the rays coplanar with the respective incident rays and the direction in which the wire 2 extends, as already indicated) to a substantially vertical ray r*' which is directed towards the transducer means 4. The parts of the apparatus designed to support the various components described are not shown in figures 6 and 7, since they can be set up according to a known method by an expert in the trade.

The present invention is subject to numerous modifications and. variations, all of which are encompassed by the design concept. Moreover, all parts may be substituted with elements that are technically equivalent.

## Claims

1. An apparatus for checking the state of wear on electrical lines, in particular those for supplying power to vehicles with electrical traction or similar electric machines (11), the lines consisting of at least one contact wire (2) being designed to connect with a sliding contact (15) present on the said electric machine (11); said wire (2), in the case of a new or unworn wire, having a substantially circular cross-section and a contact portion (20), the latter being designed to connect with the said sliding contact (15), and having the shape of a circular arc when seen in cross-section to the direction (X) in which the wire (2) extends; the contact portion being designed to pass, with gradual wear on the wire, to the shape, in the said cross-section, of a chord (20') with length (L) that increases according to the wear on the wire; the apparatus characterised in that it consists of:
- light emitting means (3) designed to emit a first directive light band or incident band (i), this being directed -towards the contact portion (20, 20') with a trajectory which forms a first angle (α) to the said direction (X) in which the wire extends, so that it is reflected in a second band or reflected band (r);
- transducer means (4) which convert the light signal into an electrical signal detected, said means being designed to detect the intensity of the reflected light bands (r*) substantially coplanar with the direction of the corresponding incident bands (i) and the direction (X) in which the wire (2) extends;
- processing means (5), being connected to the transducer means (4), and designed to measure the intensity of the said reflected light bands (r*) according to the electrical signal detected, so as to establish the wear on the wire (2) according to the intensity of the reflected light bands (r*), that is to say, according to the changes in the shape of the said contact portion (20, 20').

2. The apparatus as described in claim 1, in particular for overhead electrical lines which envisage at least one contact wire along a broken line with given width (D), characterised in that the transducer means (4) for the light signal have a range (16) whose width is at least the said given value (D).

3. The apparatus as described in claim 1, characterised in that the transducer means (4) for the light signal consist of at least one charge coupled device or CCD, which in output supplies a first signal (s(r*)) relative to the said reflected band (r*).

4. The apparatus as described in claim 1, characterised in that it includes focusing means (17), being connected to the transducer means (4) for the light signal, and being designed to focus the signal with a limited depth of field, so as to receive reflected light signals only from the contact portion (20, 20').

5. The apparatus as described in claim 1, characterised in that the said light emitting means (3) are of the monochromatic type.

6. The apparatus as described in claim 1, characterised in that the said light emitting means (3) consi.st of high-efficiency, narrow-angle LEDs

7. The apparatus as described in claim 1, characterised in that the said light emitting means (3) consist of lenticular lamps, fitted with a converging lens, so as to generate a directive light: band with rays which are substantially parallel.

8. The apparatus as described in claim 1, in particular for overhead electrical lines which envisage at least one contact wire along a broken line with given width (D), characterised in that the said light emitting means (3) consist of a plurality of LEDs positioned over a width not less than the said given value (D).

9. The apparatus as described in claim 1, in particular for overhead electrical lines which envisage at least one contact wire along a broken line with given width (D), characterised in that the said light emitting means (3) consist of a plurality of lenticular lamps positioned over a width not less than the said given value (D).

10. The apparatus as described in claim 1, characterised in that the processing means (5) include a squaring device (6), the latter having a threshold which is self-adjusting according to the ambient light, so as to convert a first signal (s(r*)), received by the transducer means (4) for the light signal and relative to the reflected band (r*), into a second signal (s'(r*)) which is corrected according to the said light.

11. The apparatus as described in claim 1, characterised in that the processing means (5) include a time measurement circuit (7), being designed to correlate a signal received, directly or indirectly, by the transducer means (4) for the light signal with a period of time, so as to supply in output a third signal (v) depending on the permanence of a light signal in a given position for a given time interval.

12. The apparatus as described in claim 1, characterised in that the processing means (5) include means for connection (8) to at least one timing circuit (10).

13. The apparatus as described in claim 1, characterised in that the processing means (5) include means for connection (8) to at least one circuit (9) which detects the movement of the said electric machine (11).

14. The apparatus as described in claim 1, characterised in that the light emitting means (3) are supported by the upper part of a pantograph (14'), in that the transducer means (4) for the light signal are positioned on the lower part of the said pantograph (14'), that is to say, on the roof of the electric machine (11), there being envisaged means (18, 18') designed to deflect the reflected light bands (r*) positioned substantially coplanar with the direction of the corresponding incident bands (i) and the direction (X) in which the wire (2) extends, to corresponding deflected bands (r*'), the latter being directed towards the transducer means (4).
